(19)

Europäisches Patentamt
European Patent Office
Office européen des brevets

(11) **EP 4 375 709 A1**

(12) **EUROPEAN PATENT APPLICATION**

(43) Date of publication:
**29.05.2024 Bulletin 2024/22**

(21) Application number: **23201904.2**

(22) Date of filing: **05.10.2023**

(51) International Patent Classification (IPC):
***G01S 17/86*** (2020.01)     ***G01S 17/88*** (2006.01)
***G01S 17/08*** (2006.01)

(52) Cooperative Patent Classification (CPC):
**G01S 17/86; G01S 17/88;** G01S 17/08

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.11.2022 EP 22209030**

(71) Applicant: **Swiss Timing Ltd**
**2606 Corgémont (CH)**

(72) Inventor: **KOLLEGA, Alexander**
**04275 Leipzig (DE)**

(74) Representative: **ICB SA**
**Faubourg de l'Hôpital, 3**
**2001 Neuchâtel (CH)**

(54) **SYSTEM AND METHOD FOR DETERMINING A ROUTE OF AN OBJECT OR A PLAYER MOVING ON A SPORT FIELD**

(57) Provided a method for determining a route (6) of an object (3a) or of a player (3b) moving on a sport field (4), this route (6) being constituted solely of stationary positions (7) of this object (3a) or of this player (3b) on this sport field (4), the method comprising:
- a step of determining (23) by a portable electronic device (2) geographical position ($X_{Ball}$, $Y_{Ball}$) data of the object (3a) or of the player (3b) during a sporting activity only when the object (3a) or the player (3b) is in a stationary position (7) on the sport field (4), and
- a step of generating (32) the route (6) of the object (3a) or of the player (3b) on a graphical representation of the sport field (4) based on the geographical position data ($X_{Ball}$, $Y_{Ball}$) calculated by the electronic device (2).

Fig. 1

Processed by Luminess, 75001 PARIS (FR)

## Description

Field of the invention

The present invention relates to a system and method for determining a route of an object or a player moving on a sport field.

Background of the invention

There are many sports in which it can be interesting to have the path followed by an object or a player moving on a sports field. We can cite for example sports such as curling, petanque, snooker, or even golf.

In the prior art, it is known that the determination of such a route is generally realised based on a system which is able to implement complex monitoring facility making it possible to locate in real time the position of the object or the player on the sport field. Such a monitoring facility used highprecision laser distance measuring systems installed at several locations on the sport field. Such a system requires a high number of skilled operators to ensure the operability of the monitoring facility.

In this context, there is a need for an improved system and method for determining a route of an object or of a player moving on a sport field, that overcome the mentioned disadvantage.

Summary of the invention

Embodiments of the present disclosure provide an alternative to the existing methods.

To this end, embodiments of the present disclosure include a method for determining a route of an object or of a player moving on a sport field, this route being constituted solely of stationary positions of this object or of this player on this sport field, the method comprising:

-    a step of determining by a portable electronic device geographical position data of the object or of the player during a sporting activity only when the object or the player is in a stationary position on the sport field, and

-    a step of generating the route of the object or of the player on a graphical representation of the sport field based on the geographical position data calculated by the electronic device.

In other embodiments:

-    the step of determining comprises a sub-step of detecting that the object or the player is in a stationary position on the sport field;

-    the step of determining comprises a sub-step of estimating characteristics of determination of the geographical position data of the object or of the player during the sporting activity;

-    the sub-step of estimating comprises a phase of measurement of a distance between the object or the player, and the electronic device;

-    the sub-step of estimating comprises a phase of evaluating an angle α of deviation from a main direction of movement of the object or the player;

-    the sub-step of estimating comprises a phase of determining geographical position of the electronic device;

-    the step of determining comprises a sub-step of calculating the position data of the object or of the player based on an angle estimated between a direction oriented towards the object or the player and a direction oriented towards a cardinal point;

-    the step of determining comprises a sub-step of calculating the position data of the object or of the player based on a distance

evaluated between the object or the player and the electronic device;

-    the step of determining comprises a sub-step of calculating the position data of the object or of the player based on a geographical position of the electronic device;

-    the sub-step of calculating comprises a phase of executing an algorithm of production of the position data implementing the mathematical formulas:

$$X_{Ball} = X_{Ped} + d.\sin(\alpha)$$

$$Y_{Ball} = Y_{Ped} + d.\cos(\alpha)$$

-    the step of generating comprises a sub-step of selecting a geographical map data relating to the sport field;

-    the step of generating comprises a sub-step of creating the route on the graphical representation of the sport field based on the geographical position data determined and the geographical map data.

Embodiments of the present disclosure also include a system for determining a route of an object or of a player moving on a sport field, this route being constituted of stationary positions of this object or of this player on this sport field, the system comprising an electronic device configured for:

- determining geographical position data of the object or of the player during a sporting activity each time the object or of the player is in a stationary position on the sport field, and

- generating the route of the object or of the player on a graphical representation of the sport field based on the geographical position data.

In other embodiments:

- the electronic device is a portable electronic device such as a smartphone, a smartwatch, a phablet or a tablet;

- the electronic device is a movable electronic device which can be moved autonomously or by being remotely controlled by a remote server or an operator.

Embodiments of the present disclosure also include a non-transitory computer-readable medium storing computer instructions configured to cause at least one processor of an electronic device to:

- determining geographical position data of the object or of the player during a sporting activity each time the object or of the player is in a stationary position on the sport field, and

- generating the route of the object or of the player on a graphical representation of the sport field based on the geographical position data.

Embodiments of the present disclosure also include a computer program, optionally stored on a medium, comprising instructions for causing an electronic device and/or a server to perform this method.

Brief description of the drawings

The present invention will be described subsequently in more detail with reference to the attached drawing, given by way of examples, but in no way limited thereto, in which:

- Figure 1 a schematic diagram illustrating view of a system for determining a route of an object or a player moving on a sport field, according to an embodiment of the invention, and

- Figure 2 represents a flowchart related to a method for determining the route of the object or the player moving on the sport field, according to the embodiment of the invention.

Detailed description of the invention

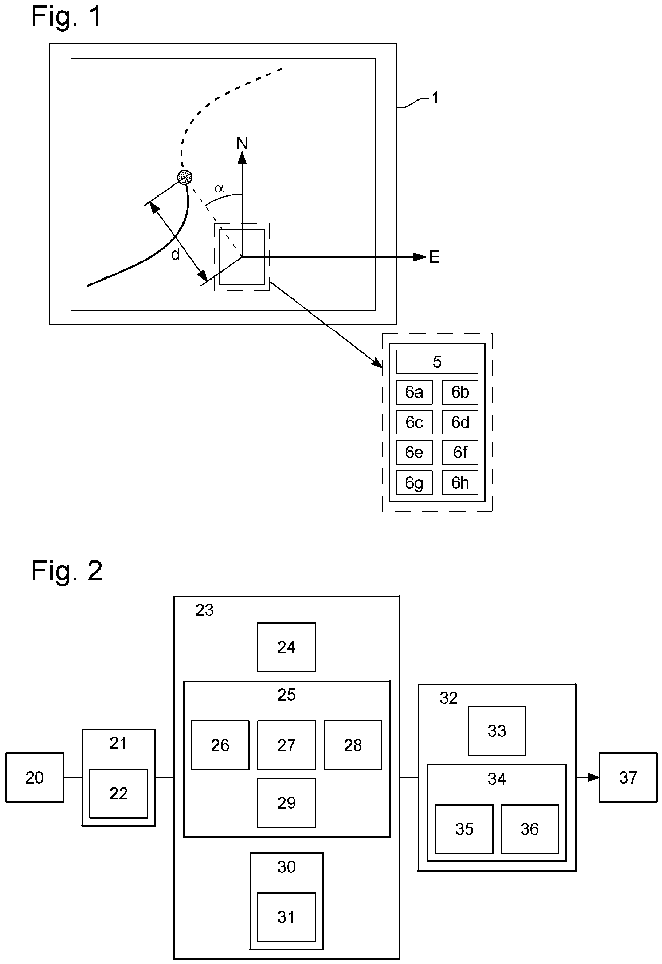

With reference to Figures 1 and 2, a system 1 and a method for determining a route 6 of an object 3a or a player 3b moving on a sport field 4 is illustrated. In this context, it can be understood that such a system 1 and such a method can also permit to monitor the progress of the object 3a or the player 3b, on the sport field 4. In other word, these system 1 and method contribute to inform visually the audience of a sport game about of the route 6 and more particularly about the last position of the object 3a or the player 3b on the sport field 4.

Such a system 1 and method can be implemented in every sports in which the object 3a or the player 3b is brought to move on a sport field 4 by marking frequent stops. These sport can be in a non-limiting and/or nonexhaustive manner: the golf, the petanque or the curling, etc... In this regard, the object 3a is a mobile object like for example a ball, a slide stone etc ...

In this context, the frequent stops correspond in this invention to stationary positions 7 of the object 3a or of the player 3b on the sport field 4. It must be understood that the stationary position 7 means that the object 3a or the player 3b stays without moving/displacing for a period of time during the sporting activity on this sport field 4.

In the context of the invention, the object is a moving object more specifically a mobile sports object which is obviously used in the field of sport. More precisely, this object is an ordinary object, i.e. an object that has not been modified with respect to the original object known to be used in the sport concerned. In other words, if this object is a golf ball, then it is the ball classically used in this sport and not a ball that has been modified to include, for example, an electronic device such as a tag RFID. This objet can also be an inert object, i.e. one that has no activity (e.g. does not generate an electromagnetic field) or movement of its own (as it requires to be set in motion by the application of a force to it).

In Figure 1, this system 1 includes an electronic device 2 which is preferably a portable electronic device or a mobile electronic device that is to say a battery operated device designed to be carried including but not limited to equipment such as laptops, tablets computers, smart phones, smart watches and the like.

This electronic device 2 can be also called "movable electronic device" as it is configured to follow the object 3a or the player 3b. Indeed, this electronic device 2 can move autonomously by including a transport module which can be removable transport module. In this configuration, this device 2 can be a rolling movable electronic device like a radio-controlled car for example a miniature model car, van or buggies that can be controlled from a distance using a specialized transmitter or remote. As a variant, this device 2 can be a flying movable electronic device like a drone.

It can be noted that when this device 2 is a movable electronic device, it can also be moved by being remotely controlled by a remote control device of this system 1. In this context, this remote control device is connected to the device 2 and can thus control the movement of the device 2 in order to follow the displacement of the object 3a or the player 3b on the sport field 4. The remote control device comprised a control unit which is able to execute a specific algorithm to control the autonomous displacement of the electronic device 2. In a variant, this remote control device comprises for controlling the movement of the electronic device 2 which can be used/manipulated by an operator. It can be noted that this operator can be located in a different place of the object 3a or the player 3b.

Such an electronic device 2 comprises in a non-limiting and/or nonexhaustive manner:

- a processing unit 5 (also referred to as a "controller") including hardware 6a and software resources 6b, in particular at least one processor cooperating with memory elements;

- a distance measurement module 6c between the electronic device and the object or the player;

- a geolocation receiver 6d suitable for use with a Global Navigation Satellite System ("GNSS") such as the Global Positioning System ("GPS");

- an interface for broadcasting a visual information 6e such as a digital display;

- an interface for broadcasting an audio information 6f such as a loudspeaker;

- a communication interface 6g allowing this device 2 to establish a communication connection with a remote server (for example cellular, WLAN Bluetooth, etc.);

- an input interface 6h as a button, a touch interface comprised in, for example, the interface for broadcasting a visual piece of information, or a microphone for voice commands.

In this device 2, the processing unit 5 is connected, inter alia, to the distance measurement module 6c and the geolocation receiver 6d, the interfaces for broadcasting 6e, 6f, the communication interface 6g and the input interface 6h.

It should be noted that this electronic device 2 is preferably not equipped with an image capture module, as such a module is not part of the embodiment of the invention described here especially for the implementation of a phase of measurement 26 of the distance d between the object 3a or the player 3b, and the electronic device 2 discussed in this description.

More specifically, the distance measurement module 6c comprises:

- a module of telemetering including an electronic telemeter, a module of telemetering, an ultrasonic rangefinder and/or a laser rangefinder;

- an active remote sensing system like for example a LIDAR acronym for "Light Detection And Ranging";

- a pedometer-type motion sensor.

It can be noted that the distance measurement module 6c is dedicated for measuring the distance between the electronic device and the object or the player. In other words, this module 6c measures this distance and transmits it to the processing unit 5 of this electronic device 2 for example to store it in an element memory of this unit 5 in order to generate a route at a later date. It is to be understood here that the electronic device 2 and more particularly the processing unit 5 is not configured to obtain this measurement in any other way. That is to say, the electronic device 2 and more particularly the processing unit 5 is not configured to obtain this distance by implementing, for example, calculations to determine (and not measure) such a distance. In this context, these calculations can be implemented, for example, when digitally processing an image including the object or player with the electronic device to determine this distance.

Moreover, the communication interface 6g of this device 2 includes communication elements for receiving and transmitting data remotely via a communication network such as the cellular telephone network, a data network of the IP type via the telephone network, or a data network of the IP type via a medium-range network, for example WI-FI or a short-range network implementing Bluetooth technology.

Furthermore, the processing unit 5 of this electronic device 2 is able to execute a computer program also called an application or "apps". More precisely in this context, the application is an "application for positioning the ball". This application is able to participate in the implementation of a part of the steps 20 to 37 of the method described below, when the processing unit 5 of the device 2 executes it.

Referring now to Figure 2, the system 1 is capable of implementing the method for determining a route 6 of the object 3a or of the player 3b moving on a sport field 4, this route 6 being constituted of stationary positions 7 of this object 3a or of this player 3b on this sport field 4.

Such a method starts with a step of executing 20 by the processing unit 5 of the device 2, the application for positioning the object 3a or the player 3b. By thus executing this application, this processing unit 5 is able to implement the followings steps of the method in order to participate to the determination of this route 6 of the object 3a or the player 3b moving on the sport field 4.

Once this application is executed by the processing unit 5, the method includes a step of arranging/positioning 21 of the electronic device 2 at a distance d of the object 3a or of the player 3b. During this step 21, the device 2 is arranged in the vicinity of this object 3a or of this player 3b, that is to say not being in contact with this object 3a or with this player 3b. In other words, the distance d established between the device 2 and, this object 3a or this player 3b is not null. More specifically, this distance is comprised between 1 and 10 meters. This distance d is preferably in the order of 4 meters.

More specifically, this step 21 comprises a substep of following 22 the object 3a or the player 3b. During this sub-step 22, the device 2 can be carried and manipulated/controlled by an accompanying person of the player 3b or of the object 3a. In this context, this sub-step 22 can comprise a phase of guiding visually and/or audibly this person via the interface for broadcasting 6e a visual guidance information/message and/or the interface for broadcasting 6f an audio guidance information/message of the device 2. Such a phase of guiding is implemented by the processing unit 5 connected to these two interfaces 6e, 6f. In an alternative, when the device 2 comprises a transport module, this device 2 can follow the player 3b or the object 3a autonomously or by being controlled remotely by the operator mentioned previously.

Furthermore, the method includes a step of determining 23 by the electronic device 2, geographical position $X_{Ball}$, $Y_{Ball}$ data of the object 3a or of the player 3b during the sporting activity. Such a step 23 is implemented by the processing unit 5 of the device 2 executing the application for positioning the object 3a or the player 3b.

This step 23 includes a sub-step of detecting 24 that the object 3a or the player 3b is in a stationary position 7. Indeed, the determination of geographical position $X_{Ball}$, $Y_{Ball}$ data requires that the object 3a or the player 3b be in a stationary/immobile position on the sport field 4. Such a sub-step 24 is suitable to detect that this object 3a or player 3b is in a stationary position 7 after the processing unit 5 of the device 2 has determined that this object 3a or player 3b has remained immobile for a time t greater than a configurable reference time.

Then, this step 24 comprises a sub-step of estimating 25 characteristics of determination of the geographical position data $X_{Ball}$, $Y_{Ball}$ of the object 3a or of the player 3b during the sporting activity.

During this sub-step 25, the device 2, more specifically its processing unit 5, is able to implement various measurement operations in order to determine the positions of the object 3a or of the player 3b. To achieve this, the device 2 performs the following phases simultaneously, or successively in any order:

- a phase of measurement 26 of the distance d between the object 3a or the player 3b, and the electronic device 2;

- a phase of determining 27 geographical position $X_{Ped}$, $Y_{Ped}$ of the electronic device 2, and

- a phase of evaluating 28 of an angle $\alpha$ of deviation from main direction of movement.

In this context, the processing unit 5 by executing this application is configured to participate in the implementation of the phase of measurement 26 of the distance d. More specifically, this phase 26 comprises:

- orientation of the electronic device 2 towards the object or player;

- activation of the distance measurement module 6 that is to say, an activation of the module of telemetering, the active remote sensing system, and/or the pedometer-type motion sensor;

- triggering the measurement of this distance;

- transmission of a measurement data to the processing unit 5.

During this phase 26, this processing unit 5 receives measurement data from the distance measurement module 6c. This measurement data relating to the distance d between the device 2 and, the object 3a or the player 3b, is then stored in the memory elements of the processing unit 5. It may be noted that this phase 26 is a measurement phase and not a determination or evaluation phase of the distance between the object 3a or player 3b and the electronic device 2. This is because evaluation or determination, unlike simple measurement, involves energy-intensive calculation and processing processes.

In an alternative, the distance d can be a predetermined distance, or a distance already known because this distance d is for instance always the same. In this context, this distance d is already stored in the form of measurement data in the memory elements of the processing unit 5.

In another variant, this distance d can be entered from the input interface by a user of this device 2 or an operator of this device 2. In this case, the processing unit 5 receives a measurement data relating to this distance from the input interface.

Furthermore, the processing unit 5 by executing this application is also configured to participate to implement the phase of determining 27 geographical position $X_{Ped}$, $Y_{Ped}$, of the device 2. More specifically, the processing unit 5 receives measurement data from the geolocation receiver of this device 2. This measurement data includes preferably information relating to geographical position of the device 2 also known as geopositioning, geotracking, geolocalization, geolocating, geolocation, or geoposition fixing. This geographical position $X_{Ped}$, $Y_{Ped}$ yields a set of geographic coordinates such as latitude and longitude in a given map datum.

Additionally, the processing unit 5 executing this application is also configured to participate to the phase of evaluating 28 of the angle $\alpha$ of deviation from main direction of movement. This angle $\alpha$ is defined between a stationary position direction and the main direction of movement. This stationary position direction is a direction oriented towards the object 3a or the player 3b when it is in a stationary position. In other words, this direction is defined between the electronic device 2 and the object 3a or the player 3b. Regarding the main direction, it relates to the dominant or general direction of the object 3a or the player 3b 3b when it is in a stationary position, this direction is defined here by the cardinal points more specifically by the four cardinal points: north, south, east, west. In this context, this phase of evaluating 28 includes identification of this main direction of movement of the object 3a or the player 3b. This identification involves selecting one of the four cardinal points with which the stationary position direction forms the smallest angle. Once the main direction has been identified, the deviation between this main direction and the stationary position direction is calculated in order to obtain the angle $\alpha$ of deviation from main direction of movement.

This phase 28 is implemented by the processing unit 5 receiving measurement data from one or several of the following sensors of the device 2, such as the acceleration sensor and/or the magnetic sensor and/or the G-sensor and/or the gyroscope sensor and/or the motion sensor. This measurement data relating to the angle $\alpha$, is then stored in the memory elements of the processing unit 5.

It can be noted that, this a sub-step of estimating 25 comprises a phase of following 29 the object 3a or the player 3b. Such a phase 29 can be executed simultaneously to the other phases 26 to 28 of this sub-step 25. This phase 29 participates to the realisation of the different measuring operations in order to determine the geographical position data $X_{Ball}$, $Y_{Ball}$ of the object 3a or of the player 3b.

During this phase 29, the device 2 can be carried and manipulated/controlled by an accompanying person of the player 3b or of the object 3a. In this context, this phase 29 can comprise a sub-phase of guiding visually and/or audibly this person via the interface for broadcasting 6e a visual guidance information/message and/or the interface for broadcasting 6f an audio guidance information/message of the device 2. Such a sub-phase of guiding is implemented by the processing unit 5 connected to these two interfaces 6e, 6f. In an alternative, when the device 2 comprises a transport module, this device 2 can follow the player 3b or the object 3a autonomously or by being controlled remotely by the operator mentioned previously.

Then, the step of determining 23 includes a sub-step of calculating 30 the position data $X_{Ball}$, $Y_{Ball}$ of the object 3a or the player 3b by the electronic device 2, more specifically by its processing unit 5. This sub-step 30 comprises a phase of executing 31 an algorithm of production of the position data $X_{Ball}$, $Y_{Ball}$ based on the following data measurements stored in the memory elements of the processing unit 5, namely:

-    the angle $\alpha$ between the direction oriented towards the object 3a or the player 3b, and the direction oriented towards a cardinal point;

-    the distance d between the object 3a or of the player 3b, and the electronic device 2, and

-    the geographical position $X_{Ped}$, $Y_{Ped}$ of the electronic device 2.

In this context, the algorithm of production of the position data $X_{Ball}$, $Y_{Ball}$ comprises the mathematical formulas:

-

$$X_{Ball} = X_{Ped} + d.\sin(\alpha)$$

-

$$Y_{Ball} = Y_{Ped} + d.\cos(\alpha)$$

with:

-    $X_{Ball}$ a geographical position component of the object 3a or of the player 3b, here geographic coordinate such as the longitude in a given map datum;
-    $Y_{Ball}$ a geographical position component of the object 3a or of the player 3b here geographic coordinate such as the latitude in a given map datum;
-    $X_{Ped}$ a geographical position component of the device 2 here geographic coordinate such as the longitude in a given map datum;
-    $Y_{Ped}$ a geographical position component of the device 2 here geographic coordinate such as the latitude in a given map datum;
-    d: the distance between the object 3a or the player 3b and the device 2;
-    $\alpha$: the angle between the direction oriented towards the object 3a or the player 3b, and a direction oriented towards a cardinal point.

Then, the position data $X_{Ball}$, $Y_{Ball}$ of the object 3a or of the player 3b here generated is stored in the memory elements of the processing unit 5.

Furthermore, the method comprises then a step of generating 32 the route 6 of the object 3a or of the player 3b on/in a graphical representation of the sport field 4 based on the geographical position data $X_{Ball}$, $Y_{Ball}$ calculated by the electronic device 2. It can be noted that this graphical representation can be a two-dimensional graphical representation or a three-dimensional graphical representation.

This step of generating 32 comprises a sub-step of selecting 33 a geographical map data relating to the sport field 4. This geographical cartographic data includes all the information concerning the geographical particularities of the sport field 4, respecting the topography, the distances and the reliefs of this ground. The memory element of the processing unit 5 comprises a plurality of geographical map data relating to different sports fields 4. These geographical map data relating to different sports fields 4 can also be stored in a remote server to which the device 2 is able to connect in the context of this sub-step of selecting 33.

Then this step 32 comprises a sub-step of creating 34 the route 6 on/in the graphical representation of the sport field 4 based on the geographical position data $X_{Ped}$, $Y_{Ped}$ determined and these geographical map data. This sub-step 34 includes a phase of generating 35 by the processing unit 5 of the device 2 this graphical representation based on the geographical map data previously selected.

Afterwards, the sub-step of creating 34 includes a phase of positioning 36 the stationary positions 7 on this graphical representation based on the geographical map data and the geographical position data $X_{Ped}$, $Y_{Ped}$ previously determined.

During this sub-step 34, the processing unit 5 is able to implement these two phases 35, 36 by executing instructions for implementing a graphical program for generating the graphical representation comprising the route 6 realised by the object 3a or the player 3b based on the geographical map data and the geographical position data $X_{Ped}$, $Y_{Ped}$.

The method can comprise a step of broadcasting 37 the graphical representation of the sport field 4 including this route 6 to:

- the interface for broadcasting a visual information 6e of the device 2, or

- to the remote server comprising a web server application or a streaming server application.

It may be noted that the step of generating 32 the route 6 is executed once all the geographical position data have been determined. That is to say when the sporting activity or the game is finished. As a variant, this step 32 can be executed for each determined geographic position datum. That is to say each time this geographical position data is obtained.

Furthermore, the present disclosure also include a non-transitory computer-readable medium storing computer instructions configured to cause at least one processor of an electronic device to:

- determining geographical position data $X_{Ball}$, $Y_{Ball}$ of the object or of the player during a sporting activity each time the object or of the player is in a stationary position 7 on the sport field, and

- generating the route of the object or of the player on a graphical representation of the sport field based on the geographical position data $X_{Ball}$, $Y_{Ball}$.

The foregoing is only illustrative of preferred embodiments of the present invention. The present invention is not limited to the above embodiments. It should be understood that further improvements and changes that are directly derived or conceived by those skilled in the art without departing from the basic concept of the present invention should be considered to be included in the protective scope of the present invention.

**Claims**

1. A method for determining a route (6) of an object (3a) or of a player (3b) moving on a sport field (4), this route (6) being constituted solely of stationary positions (7) of this object (3a) or of this player (3b) on this sport field (4), the method comprising:

   - a step of determining (23) by a portable electronic device (2) geographical position ($X_{Ball}$, $Y_{Ball}$) data of the object (3a) or of the player (3b) during a sporting activity only when the object (3a) or the player (3b) is in a stationary position (7) on the sport field (4), and
   - a step of generating (32) the route (6) of the object (3a) or of the player (3b) on a graphical representation of the sport field (4) based on the geographical position data ($X_{Ball}$, $Y_{Ball}$) calculated by the electronic device (2).

2. The method according to the preceding claim, **characterised in that** the step of determining (23) comprises a sub-step of detecting (24) that the object (3a) or the player (3b) is in a stationary position (7) on the sport field (4).

3. The method according to any of the preceding claims, **characterised in that** the step of determining (23) comprises a sub-step of estimating (25) characteristics of determination of the geographical position data ($X_{Ball}$, $Y_{Ball}$) of the object or of the player during the sporting activity.

4. The method according to the preceding claim, **characterised in that** the sub-step of estimating (25) comprises a phase of evaluating (28) an angle ($\alpha$) of deviation from a main direction of movement of the object (3a) or the player (3b).

5. The method according to the preceding claims 3 and 4, **characterised in that** the sub-step of estimating (25) comprises a phase of measurement (26) of a distance (d) between the object (3a) or the player (3b), and the electronic device (2).

6. The method according to the preceding claims 3 to 5, **characterised in that** the sub-step of estimating (25) comprises a phase of determining (27) geographical position $X_{Ped}$, $Y_{Ped}$ of the electronic device (2).

**7.** The method according to any of the preceding claims, **characterised in that** the step of determining (23) comprises a sub-step of calculating (30) the position data ($X_{Ball}$, $Y_{Ball}$) of the object (3a) or of the player (3b) based on:

- an angle ($\alpha$) estimated between a direction oriented towards the object (3a) or the player (3b) and a direction oriented towards a cardinal point;
- a distance (d) evaluated between the object (3a) or the player (3b) and the electronic device (2), and
- a geographical position ($X_{Ped}$, $Y_{Ped}$) of the electronic device (2).

**8.** The method according to the preceding claim, **characterised in that** the sub-step of calculating (30) comprises a phase of executing (31) an algorithm of production of the position data ($X_{Ball}$, $Y_{Ball}$) implementing the mathematical formulas:

-

$$X_{Ball} = X_{Ped} + d.\sin(\alpha)$$

-

$$Y_{Ball} = Y_{Ped} + d.\cos(\alpha)$$

**9.** The method according to any of the preceding claims, characterised that the step of generating (32) comprises a sub-step of selecting (33) a geographical map data relating to the sport field (4).

**10.** The method according to the preceding claim, **characterised in that** the step of generating (32) comprises a sub-step of creating (34) the route (6) on the graphical representation of the sport field (4) based on the geographical position data ($X_{Ball}$, $Y_{Ball}$) determined and the geographical map data.

**11.** A system (1) for determining a route (6) of an object (3a) or of a player (3b) moving on a sport field (4), this route (6) being constituted of stationary positions (7) of this object (3a) or of this player (3b) on this sport field (4), the system comprising an electronic device (2) configured for:

- determining geographical position data ($X_{Ball}$, $Y_{Ball}$) of the object (3a) or of the player (3b) during a sporting activity each time the object (3a) or of the player (3b) is in a stationary position (7) on the sport field (4), and
- generating the route (6) of the object (3a) or of the player (3b) on a graphical representation of the sport field (4) based on the geographical position data ($X_{Ball}$, $Y_{Ball}$).

**12.** The system (1) according to the preceding claim, **characterised in that** the electronic device (2) is a portable electronic device (2) such as a smartphone, a smartwatch, a phablet or a tablet.

**13.** The system (1) according to claim 12, **characterised in that** the electronic device (2) is a movable electronic device which can be moved autonomously or by being remotely controlled by a remote server (4) or an operator.

**14.** A non-transitory computer-readable medium storing computer instructions configured to cause at least one processor of an electronic device to:

- determining geographical position data ($X_{Ball}$, $Y_{Ball}$) of the object (3a) or of the player (3b) during a sporting activity each time the object (3a) or of the player (3b) is in a stationary position (7) on the sport field (4), and
- generating the route (6) of the object (3a) or of the player (3b) on a graphical representation of the sport field (4) based on the geographical position data ($X_{Ball}$, $Y_{Ball}$).

# Fig. 1

# Fig. 2

Europäisches
Patentamt

European
Patent Office

Office européen
des brevets

# EUROPEAN SEARCH REPORT

**Application Number**

EP 23 20 1904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/088023 A1 (WERNER JON H [US]) 8 April 2010 (2010-04-08) * figure 1 * * paragraph [0009] – paragraph [0010] * * paragraph [0051] – paragraph [0086] * * paragraph [0105] – paragraph [0142] * ----- | 1-14 | INV. G01S17/86 G01S17/88 ADD. G01S17/08 |
| A | US 2022/268932 A1 (FORSBERG CHARLES [GB]) 25 August 2022 (2022-08-25) * figure 3 * * paragraph [0058] – paragraph [0059] * ----- | 3-8,12 | |
| A | US 2008/207357 A1 (SAVARESE CHRIS [US] ET AL) 28 August 2008 (2008-08-28) * figures 1A-1C, 8 * * paragraph [0015] – paragraph [0024] * * paragraph [0052] – paragraph [0069] * * paragraph [0089] – paragraph [0093] * ----- | 3-8,12 | |
| A | US 2019/377345 A1 (BACHRACH ABRAHAM GALTON [US] ET AL) 12 December 2019 (2019-12-12) * figures 7-14 * * paragraph [0070] – paragraph [0109] * ----- | 13 | TECHNICAL FIELDS SEARCHED (IPC) G01S G01C A63B |
| A | US 2017/354858 A1 (LEWIS ROBERT A [US] ET AL) 14 December 2017 (2017-12-14) * claims 1, 5-7, 11-12; figures 1-4, 9 * * paragraphs [0003] – [0006] * * paragraphs [0019] – [0060] * * paragraphs [0088] – [0090] * ----- | 3-8,12 | |

The present search report has been drawn up for all claims

| Place of search | Date of completion of the search | Examiner |
|---|---|---|
| Munich | 18 March 2024 | Krummenacker, Benoît |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 1904

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2024

| Patent document cited in search report | | Publication date | Patent family member(s) | | Publication date |
|---|---|---|---|---|---|
| US 2010088023 | A1 | 08-04-2010 | EP | 2172249 A2 | 07-04-2010 |
| | | | EP | 2666520 A1 | 27-11-2013 |
| | | | US | 2010088023 A1 | 08-04-2010 |
| | | | US | 2017007882 A1 | 12-01-2017 |
| US 2022268932 | A1 | 25-08-2022 | AU | 2020243456 A1 | 18-11-2021 |
| | | | CA | 3141746 A1 | 24-09-2020 |
| | | | EP | 3942333 A1 | 26-01-2022 |
| | | | US | 2022268932 A1 | 25-08-2022 |
| | | | WO | 2020188304 A1 | 24-09-2020 |
| US 2008207357 | A1 | 28-08-2008 | US | 2008207357 A1 | 28-08-2008 |
| | | | WO | 2008100430 A1 | 21-08-2008 |
| US 2019377345 | A1 | 12-12-2019 | US | 2019377345 A1 | 12-12-2019 |
| | | | US | 2022374012 A1 | 24-11-2022 |
| | | | US | 2022374013 A1 | 24-11-2022 |
| | | | US | 2024053750 A1 | 15-02-2024 |
| US 2017354858 | A1 | 14-12-2017 | US | 2017354858 A1 | 14-12-2017 |
| | | | US | 2020238154 A1 | 30-07-2020 |
| | | | US | 2023356060 A1 | 09-11-2023 |

EPO FORM P0459

For more details about this annex : see Official Journal of the European Patent Office, No. 12/82